# EUROPÄISCHE PATENTSCHRIFT

(11) **EP 0 878 331 B1**
(45) Veröffentlichungstag und Bekanntmachung des Hinweises auf die Patenterteilung: **02.01.2004**
(21) Anmeldenummer: 98890136.9
(22) Anmeldetag: 11.05.1998
(51) Int. Cl.: B60C 27/08

(54) **Verstellanordnung für den Knotenpunkt von (Gleitschutz-) Kettensträngen**
Adjusting device for linking many (antislip-) chain parts
Dispositif d'ajustement de jonction pour raccorder plusieurs brins de chaînes (anti-patinage)

(30) Priorität: 14.05.1997 AT 82497
(43) Veröffentlichungstag der Anmeldung: 18.11.1998
(73) Patentinhaber: Pewag Austria GmbH, 8021 Graz (AT)
(72) Erfinder: Posch, Gerhard, Dipl.Ing. Dr., 8045 Graz (AT); Kronsteiner, Herbert, 8052 Graz (AT)
(74) Vertreter: Matschnig, Franz, Dipl.-Ing.

(56) Entgegenhaltungen:
- AT-B- 276 978
- DE-A- 2 406 102
- FR-A- 820 171

## Beschreibung

Die Erfindung bezieht sich auf eine Verstellanordnung für den Knotenpunkt von Kettensträngen, in welchem diese mit ihren Endgliedern miteinander verbunden sind.

Die Erfindung bezieht sich auch auf ein Verbindungsglied für Ketten, die mit Endgliedern in das Verbindungsglied eingehängt sind.

Schließlich bezieht sich die Erfindung auch auf eine Reifenkette für Kraftfahrzeuge, mit einem Kettennetz für die Lauffläche eines Rades und mit Haltemitteln zum Festlegen des Kettennetzes, wobei das Kettennetz Knotenpunkte aufweist, in welchen die Endglieder von zumindest zwei Kettenstücken miteinander verbunden sind.

Bei Gleitschutz- oder Reifenschutzketten sind eine Vielzahl von Lösungen bekannt geworden, um eine locker gewordene Kette nachzuspannen. Generell erfolgt dabei ein Nachspannen durch Spann- oder Verkürzungsglieder an seitlichen Kettenteilen, die im wesentlichen parallel zur Radebene verlaufen, oder aber an seitlichen Zugketten, was beispielsweise in der US 3 888-290 A gezeigt ist. Eine Kette kann im Betrieb üblicherweise durch Reifenabnützung oder durch Abnützung der Kette locker werden. Es kann aber auch umgekehrt der Fall eintreten, daß bei einer Vergrößerung des Reifendurchmessers, beispielsweise falls ein abgefahrener Reifen runderneuert wird, was insbesondere LKW-Reifen betrifft, die Kette zu eng anliegt und lockerer werden soll. In beiden Fällen entspricht die Kette jedenfalls nicht der Reifendimension, für welche sie vorgesehen ist.

Ein Verstellen der Kette über seitliche Spannketten etc. erfolgt in der Regel nur an der Außenseite des Rades, wodurch bei einem Anspannen oder Lockern der Kette das Kettennetz auf der Lauffläche mehr oder weniger nach außen gezogen wird, was eine unerwünschte Symmetrie mit sich bringen kann. Schließlich sind auch Ketten bekannt geworden, die seitliche Spannbügel aufweisen, die nur geöffnet oder geschlossen werden, sodaß ein Nachspannen überhaupt nicht vorgesehen ist.

Aus der gattungsgemäßen AT 276 978 geht eine Vorrichtung in Form einer Platte mit einem Kreuzschlitz hervor, die zum Verlängern oder Verkürzen eines Kettenstranges dient. Die beiden Endglieder von zwei Strängen sind in die Platte eingehängt und liegen - je nach Stellung der Platte - an den Enden eines kurzen oder eines dazu senkrecht stehenden langen Schlitzes an, wobei ein elastischer Stöpsel, in die Mitte des Kreuzschlitzes eingebracht, die Kettenglieder sichern soll. Diese bekannte Vorrichtung kann nicht für Knotenpunkte von drei oder mehr Kettensträngen verwendet werden und benötigt ein eigenes Sicherungsmittel, das leicht verloren gehen kann.

Die DE 24 06 102 A1 betrifft die Verbindung von Kettensträngen in Knoten mit Hilfe eines Kettengliedes, in welches die Anschlußglieder eingefädelt und danach durch Deformation des Kettengliedes an dem Knoten gehalten werden. Irgendeine Längenverstellung im Knotenbereich ist weder vorgesehen noch möglich.

Eine Aufgabe der Erfindung besteht darin, eine einfache Möglichkeit zu finden, um eine Gleitschutzkette, sei sie zu locker oder zu eng, auf einfache Weise der aktuellen Reifenabmessung anzupassen.

Diese Aufgabe wird bei einer Gleitschutzkette der eingangs genannten Art gelöst, bei welcher erfindungsgemäß die Eintiefung dem Draht- bzw. Querschnittsprofil des Verstellgliedes angepaßt ist.

Die Erfindung ermöglicht es, durch ein einfaches Verdrehen des Verstellgliedes um 90° bei gleichzeitigem Umhängen der in dem Verstellglied eingehängten Endglieder ein Lockern oder Anspannen des Kettennetzes zu erreichen.

Vorteilhafterweise verläuft die Ebene des Verstellgliedes im wesentlichen tangential zur Lauffläche des Rades, sodaß die Endglieder auf der Lauffläche stehen. Hierdurch ergibt sich eine Schonung des wegen seiner Größe leichter für Beschädigung anfälligen Verstellgliedes.

Bei einer zweckmäßigen Variante der erfindungsgemäßen Reifenkette ist vorgesehen, daß die lichte Weite der Verengung kleiner ist, als der Drahtdurchmesser der Endglieder und jedes der Endglieder in zumindest einem Längsschenkel eine Eintiefung, Abflachung od. dgl. aufweist, in deren Bereich zumindest eine Querschnittsabmessung des Glieddrahtes geringer ist als die lichte Weite der Verengung. Dadurch ist ein unbeabsichtigtes Verstellen des Gliedes nicht möglich. Die Endglieder können nach Aufstellen durch die Verengung gefädelt werden.

Zweckmäßigerweise ist die Eintiefung dem Draht- bzw. Querschnittsprofil des Verstellgliedes angepaßt, da sich dadurch die geringste Schwächung der Endglieder ergibt.

Die Erfindung kann jedoch auch auf Verstellanordnungen für den Knotenpunkt von Kettensträngen ganz allgemein angewandt werden, bei welchen sich die gleiche Aufgabe einer einfachen Verstellmöglichkeit ergibt. In diesem Fall sieht die Erfindung vor, daß ein doppelkeulenförmiges Verstellglied vorgesehen ist, welches zwei, durch eine Verengung voneinander abgesetzte Aufnahmeöffnungen für eingehängte Endglieder der Kettenstränge aufweist. Daei ist eine vorteilhafte Variante dadurch ausgezeichnet, daß die lichte Weite der Verengung kleiner als der Drahtdurchmesser der Endglieder ist, und jedes der Endglieder in zumindest einem Längsschenkel eine Eintiefung, Abflachung oder dergleichen aufweist, in deren Bereich zmindest eine Querschnittsabmessung des Glieddrahtes geringer ist als die lichte Weite der Verengung. Hierbei ist es zweckmäßig, wenn die Eintiefung dem Draht- bzw. Querschnittsprofil des Verstellgliedes angepaßt ist.

Weiters kann die Erfindung ganz allgemein bei einem Verbindungsglied für Ketten angewendet werden, die mit Endgliedern in dieses Verbindungsglied eingehängt sind, wie dies beispielsweise bei Kettengeschirren der Fall sein kann.

Auch in diesem Fall sieht die Erfindung vor, daß das Verbindungsglied doppelkeulenförmig ausgeführt ist und durch eine Verengung voneinander abgesetzte Aufnahmeöffnungen aufweist.

Dabei kann mit Vorteil die lichte Weite der Verengung kleiner sein als der Drahtdurchmesser der Endglieder, jedoch jedes der Endglieder weist zumindest in einem Längsschenkel eine Eintiefung, Abflachung oder dergleichen auf, in deren Bereich zumindest eine Querschnittsabmessung des Glieddrahtes geringer ist als die lichte Weite der Verengung.

Die Erfindung bietet hier den Vorteil, daß zwar ein Umhängen der Endglieder von Ketten möglich ist, jedoch andererseits eine Sicherung gegen eine unbeabsichtigte Änderung der jeweiligen Konstellation gegeben ist. Hier ist zu bemerken, daß das Verbindungsglied beispielsweise auch drei Ketten miteinander verbinden kann oder zwei Ketten mit einem Seil, etc.

Es ist auch hier zweckmäßig, wenn die Eintiefung dem Draht- bzw. Querschnittsprofil des Verbindungsgliedes angepaßt ist.

Bei einem Sicherungsstück für eine Verstellanordnung, ein Verbindungsglied oder eine Reifenkette nach der Erfindung ist mit Vorteil vorgesehen, daß das aus Kunststoff bestehende plattenförmige Sicherungsstück eine dem verengten Mittelteil des doppelkeulenförmigen Verstellgliedes angepaßte Ausnehmung aufweist, in welcher der Mittelteil des Verstellgliedes aufnehmbar ist und dabei nach oben hin durch die Ausnehmung zumindest teilweise abdeckende elastisch wegbiegbare Stege abdeckbar ist.

Ein solches Verbindungsglied bietet einen hervorragenden Schutz gegen unbeabsichtigtes Lösen der Verstellung im Knotenpunkt, gewährleistet bei einer Reifenkette eine korrekte Lage der Glieder im Knoten und bietet zusätzlichen mechanischen Schutz.

Es ist vorteilhaft, wenn es außerhalb der Ausnehmung, vorzugsweise zu beiden Seiten derselben eingesetzte Spikes aufweist. Auf diese Weist ist eine zusätzliche, meist sehr erwünschte Nutzung des Sicherungsstückes möglich.

Schließlich kann es empfehlenswert sein, falls am Boden der Ausnehmung ein nach oben ragender Mittelsteg vorgesehen ist. Dadurch ergibt sich ein besonders guter Sitz des Verstellgliedes in dem Sicherungsteil.

Die Erfindung samt weiterer Vorteile ist an Hand einer beispielsweisen Ausführungsform in Zusammenhang mit einer Gleitschutzkette beschrieben und in der Zeichnung veranschaulicht. In dieser zeigen
Fig. 1 in einer Draufsicht einen Knotenpunkt von vier Kettensträngen mit einem Verstellglied, wobei die stehenden Kettenglieder geschnitten sind am Beispiel eines Abschnitts des Kettennetzes einer Gleitschutzkette,
Fig. 2 eine Ansicht wie Fig. 1, jedoch mit einer anderen Lage des Verstellgliedes,
Fig. 3 ein Endglied in Vorderansicht,
Fig. 4 dieses Endglied in Seitenansicht,
Fig. 5 in einer Teilansicht des Schnittes nach der Linie 5-5 in Fig.2 das Umhängen eines Endgliedes,
Fig. 6 eine Anordnung wie in Fig. 2, jedoch mit einem zusätzlichen Sicherungsstück und
Fig. 7 einen Schnitt nach der Linie VII - VII in Fig. 6.

Die Erfindung ist im folgenden unter Bezugnahme auf eine Reifenkette näher erläutert. Es wird vorausgesetzt, daß der Aufbau und die Verwendung von Reifenketten für den Fachmann geläufig sind, wobei unter Reifenketten Gleitschutzketten, hier auch Schneeketten, sowie Reifenschutzketten zu verstehen sind. Eine solche Reifenschutzkette besteht im wesentlichen aus einem Laufteil, der im folgenden Kettennetz genannt wird, und der auf der Lauffläche eines Rades durch Haltemittel festgehalten wird. Solche Haltemittel sind gleichfalls in vielen Ausführungsformen bekannt geworden, beispielsweise kann es sich um seitliche Spannketten handeln, um umklappbare Spannhebel, Federringe etc. Diese seitlichen Spannmittel sind jedoch nicht unmittelbar Gegenstand der Erfindung und daher nicht näher beschrieben oder gezeigt. Knotenpunkte eines Kettennetzes, in welchen drei bzw. vier Kettenstücke miteinander verbunden sind, gehen beispielsweise aus der DE 16 05 671 B2 hervor. In diesem Dokument ist als Spannmittel eine Spannkette gezeigt und die Ketten sind in den Knotenpunkten über ringförmige Glieder verbunden, zum Teil auch über lösbare, d.h. entfernbare Anschlußglieder.

Unter Bezugnahme auf die Fig. bis 5 soll nun die Erfindung näher erläutert werden. Gezeigt ist dabei ein Knotenpunkt, in dem vier Kettenstränge oder Kettenstücke K1, K2, K3 und K4 über ein Verstellglied V miteinander verbunden sind. Das Verstellglied V ist dabei doppelkeulenförmig ausgebildet und besitzt zwei, durch eine Verengung 1 voneinander abgesetzte Aufnahmeöffnungen A1 und A2. Die lichte Weite w der Verengung 1 ist dabei kleiner als der Drahtdurchmesser d der Endglieder E1..E4. Dies gilt allerdings mit der Einschränkung, daß jedes Endglied E1 bis E4 in einem Längsschenkel eine Eintiefung 2 besitzt, in deren Bereich eine minimale Querschnittsabmessung q des Glieddrahtes geringer ist als die zuvor genannte lichte Weite w der Verengung 1.

Die Kettenglieder, die Endglieder E1 bis E4 und das Verstellglied V bestehen im allgemeinen aus Stahl, insbesondere aus gehärtetem oder sonst behandeltem Stahl, doch soll die Erfindung nicht auf ein Verstellglied oder Endglieder beschränkt sein, die aus Stahl bestehen. Es können hierzu auch entsprechend feste Kunststoffe herangezogen werden und ebenso andere Metalle oder Legierungen. Dies wird insbesondere von dem Einsatzzweck der Kette abhängen, beispielsweise davon, ob die Kette vorwiegend auf Schnee oder beispielsweise auf spitzem und harten Gestein einzusetzen ist. Was die Herstellung des Verstellgliedes anbelangt, so kann dieses als Schmiedeteil ausgebildet sein, es kann durch Stanzen aus einer Blechtafel, durch Zusammenschweißen zweier Teile oder als Gußteil hergestellt sein.

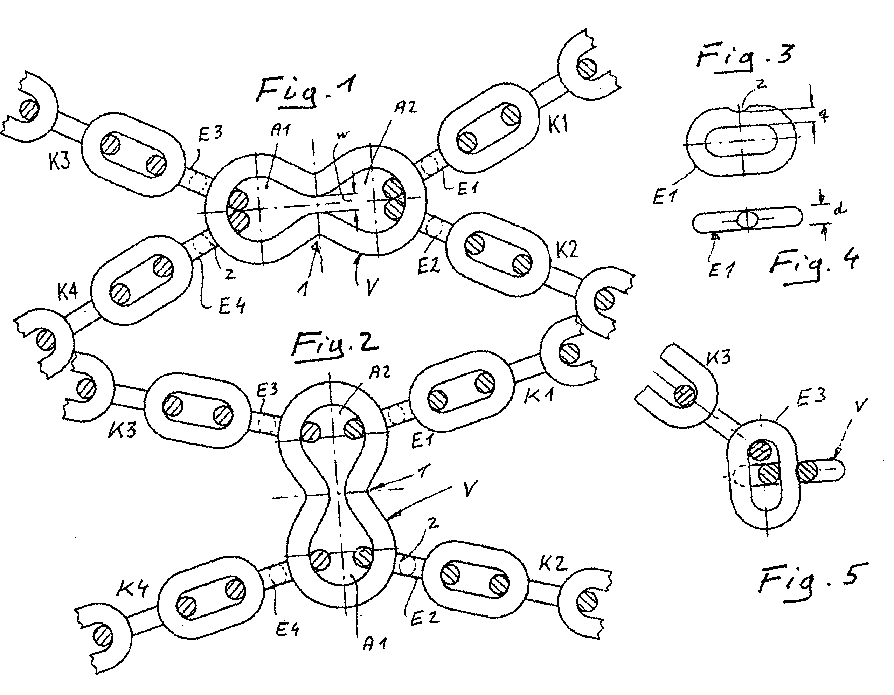

Aus Fig. 1 erkennt man, daß die Kettenstränge K1 und K2 mit ihren Endgliedern E1 und E2 in die in der Zeichnung rechte Aufnahmeöffnung A2 eingehängt sind, wogegen die Kettenstränge K3 und K4 mit ihren Endgliedern E3 und E4 in die in der Zeichnung linke Aufnahmeöffnung A1 eingehängt sind. Es ist nun möglich, das Verstellglied V um 90° zu verdrehen und dabei in die in Fig.2 gezeigte Lage zu bringen. Dabei müssen allerdings zwei Endglieder aus der einen Aufnahmeöffnung in die andere Aufnahmeöffnung gebracht werden. Dies ist in der normalen Betriebslage der Endglieder zwar nicht möglich, doch kann man die Endglieder dann durch die Verengung 1 fädeln, wenn man ein Glied aufstellt, wie dies in Fig.5 illustriert ist, und dann durch die Verengung 1 schiebt, wobei die Eintiefung 2 sich innen an das Querschnittsprofil des Verstellgliedes V anschmiegt. Dieses Profil kann, wie bei dem Ausführungsbeispiel gezeigt, kreisförmig sein (Rundstahl), es kann jedoch auch ein anderes, für den jeweiligen Einsatz der Reifenkette geeignetes Kettenprofil verwendete werden, insbesondere ein im wesentlichen rechteckförmiges mit mehr oder weniger abgerundeten Kanten.

Das oben erwähnte Durchfädeln der Endstücke durch die Verengung 1 ermöglicht es, aus der in Fig. 1 gezeigten Konfiguration zu der in Fig. 2 gezeigten zu gelangen. Beispielsweise wurde das Verstellglied V gegen den Uhrzeigersinn um 90° verdreht, sodaß die Aufnahmeöffnung A2 nun in der Zeichnung von rechts nach oben gewandert ist. Das Endglied E1 wurde dabei in der Aufnahmeöffnung A2 belassen, hingegen wurde das Endglied E3 des Kettenstranges K3 durch die Verengung V aus der Aufnahmeöffnung A1 in die Aufnahmeöffnung A2 gefädelt, sodaß nun die Endstücke E3 und E2 Nachbarn in der Aufnahmeöffnung A2 geworden sind. Analog wurde das Endstück E4 in der Aufnahmeöffnung A1 belassen, jedoch das Endstück E2 aus der Aufnahmeöffnung A2 in die Aufnahmeöffnung A1 gefädelt, sodaß nun, in der Zeichnung unten, die Endglieder E4 und E2 in der ersten Aufnahmeöffnung A1 zu Nachbarn geworden sind. Es ist jedoch ersichtlich, daß auf diese Weise gleichzeitig eine Verkürzung in dem Knotenpunkt eingetreten ist, d. h., die Endglieder E3 und E1 einerseits und die Endglieder E4 und E2 andererseits wurden näher zueinander gezogen und befinden sich ebenso wie bei der gestreckteren Lage nach Fig. 1 in einer stabilen Lage.

Wenn demnach auf einer Reifenkette mehrere der gezeigten Knotenpunkte längs des Radumfanges vorgesehen sind, kann eine Einstellung des Umfanges der Kette, somit ein Anspannen oder Lockern an den effektiven Raddurchmesser dadurch erfolgen, daß man an ausgewählten Knotenpunkten die Verbindungsglieder V entweder zum Lockern in die in Fig. 1 gezeigte Lage bringt, oder - zum Anspannen - in die in Fig. 2 gezeigte Lage. Eine neue Kette kann beispielsweise so geliefert werden, daß an den Knotenpunkten abwechselnd die Lage nach Fig.1 und jene nach Fig.2 fabrikmäßig eingestellt ist, wobei die Kette genau für die entsprechende Reifendimension paßt. Wird nun die Kette lockerer, sei es durch Abnutzung des Reifens, sei es durch Abnutzung der Kette, so kann man in weiteren Knotenpunkten die Lage nach Fig.2 herbeiführen, wodurch die Kette wieder enger an dem Rad anliegt. Wird umgekehrt der effektive Durchmesser eines Reifens dadurch größer, daß dieser zum Runderneuern gebracht wurde, so kann man in weiteren Knotenpunkten die Lage der Verbindungsglieder V nach Fig. 1 herbeiführen, wodurch die Kette weiter wird.

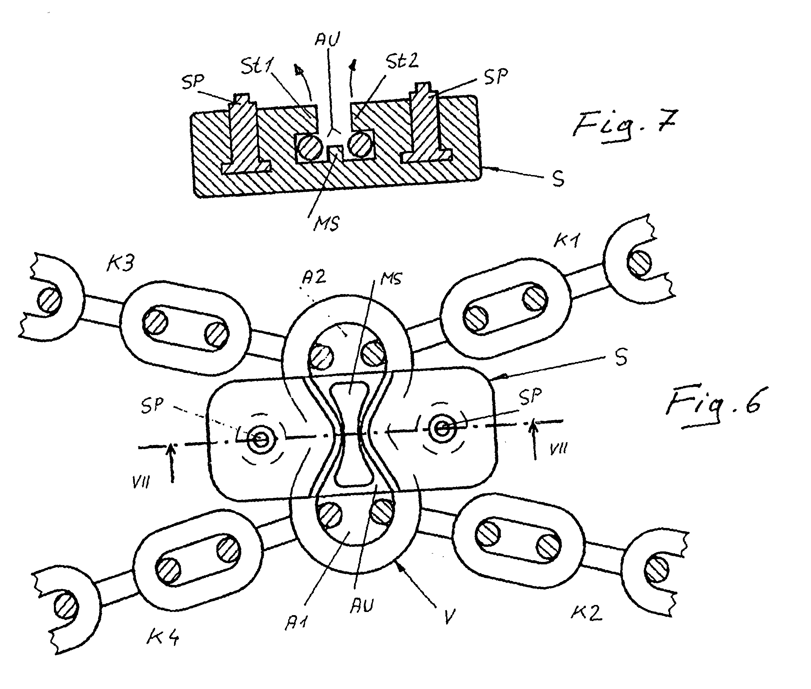

Bei der Ausführung nach Fig. 6 und 7, die im Prinzip jener nach Fig. 1 und 2 entspricht, wobei Fig. 6 mit Fig. 2 vergleichbar ist, ist noch ein zusätzliches Sicherungsstück S vorgesehen. Dieses Sicherungsstück besteht aus Kunststoff, ist plattenförmig ausgebildet und liegt mit seinem flachen Boden (siehe Fig. 7) bei Verwendung auf der Lauffläche eines Reifens auf. Das Sicherungsstück S besitzt eine Ausnehmung AU, welche dem verengten Mittelteil des doppelkeulenförmigen Verstellgliedes V angepaßt ist. Diese Ausnehmung ist nach oben hin durch zwei elastisch wegbiegbare Stege ST1 und ST2 teilweise abgedeckt, und überdies ist am Boden der Ausnehmung AU ein nach oben ragender, relativ niedriger Mittelsteg MS vorgesehen.

Das Sicherungsstück S wird von unten in das Sicherungsstück V hineingedrückt, wobei zuvor ein Aufbiegen nach außen im Sinne der in Fig. 7 eingezeichneten Pfeile erfolgt. Durch dieses Aufbiegen werden die Stege ST1 und ST2 geöffnet, und das verengte Mittelstück des Verstellgliedes V kann in die Ausnehmung AU eingebracht werden, wo es dann so liegt, wie aus Fig. 7 gut ersichtlich. Im Bedarfsfall kann das Sicherungsstück S wieder durch Aufbiegen und Abnehmen von dem Verstellglied V entfernt werden.

Das Sicherungsstück S bietet naturgemäß eine hervorragende Sicherung gegen unbeabsichtigtes Verstellen der Anordnung, da die eingehängten Glieder ihren Platz nicht wechseln können. Außerdem ist eine gute Positionierung des Knotens auf der Reifenlauffläche durch das Sicherungsstück S gegeben, und die Abnutzung des Verstellgliedes V wird durch das Sicherungsstück auch verringert. Überdies kann das Sicherungsstück S auch dazu dienen, Spikes SP aufzunehmen. Im vorliegenden Fall sind zu beiden Seiten der Längsmittelebene des Verstellgliedes V Spikes SP vorgesehen, nämlich je ein Spike zu jeder Seite. Gerade in Verbindung mit Schneeketten zeigen Sicherungsstücke S mit Spikes besondere Vorteile, doch sind naturgemäß Spikes für das Sicherungsstück nicht notwendigerweise erforderlich.

Es ist zu bemerken, daß die dargestellte Ausführungsform, bei welcher vier Kettenstücke mit ihren Endgliedern symmetrisch in die beiden Öffnungen des Verstellgliedes eingreifen, aus verschiedenen Gründen zu bevorzugen ist, daß es jedoch auch möglich ist, in ein Verstellglied lediglich zwei oder drei Kettenstücke mit ihren Endgliedern einzuhängen. Andererseits können beispielsweise auch vier Endglieder von Ketten in jede der beiden Aufnahmeöffnung A1 und A2 eingehängt werden, sofern die Dimensionierung des Verstellgliedes in Hinblick auf die Kettendimensionen geeignet gewählt ist. Es ist letztlich auch möglich, bei der gezeigten Ausführungsform und bei der Stellung des Verstellgliedes nach Fig.2, die Endglieder E4 und E2 zusammen mit den Endgliedem E1 und E3 in die zweite Aufnahmeöffnung A2 - in Fig.2 obeneinzuhängen, sodaß die Aufnahmeöffnung A1 freibleibt.

Es soll weiters klar sein, daß die Erfindung überall dort verwendet werden kann, wo Knotenpunkte von Kettensträngen vorliegen und wo ein Verkürzen oder Verlängern gewünscht ist. Dies kann letztlich bei Hebezeugen, Anschlagketten, Zurrketten od. dgl. der Fall sein.

Weiters ist es auch möglich, das Verstellglied nach der Erfindung als Verbindungsglied zur Verbindung von Ketten, Ketten mit Haken oder Ketten mit Seilen etc. zu verwenden, wobei es in diesen Fällen nicht vorrangig auf die Veränderung einer Länge ankommen muß, sondern auf eine Umkonfigurierung der Anordnung, wobei zusammen mit dem Verstellglied verwendete Endglieder von Ketten wegen der vorgesehenen Verengung nicht unbeabsichtigt in eine andere Position gelangen können.

## Patentansprüche

1. Verstellanordnung für den Knotenpunkt von Kettensträngen (K1..K4), in welchem diese über Endglieder (E1..E4) miteinander verbunden sind,
**dadurch gekennzeichnet, daß**
ein doppelkeulenförmiges Verstellglied (V) vorgesehen ist, welches zwei, durch eine Verengung (1) voneinander abgesetzte Aufnahmeöffnungen (A1,A2) für eingehängte Endglieder (E1..E4) der Kettenstränge (K1..K4) aufweist.

2. Verstellanordnung nach Anspruch 1, **dadurch gekennzeichnet, daß** die lichte Weite (w) der Verengung (1) kleiner ist, als der Drahtdurchmesser (d) der Endglieder (E1..E4) und jedes der Endglieder (E1..E4) in zumindest einem Längsschenkel eine Eintiefung (2), Abflachung od. dgl. aufweist, in deren Bereich zumindest eine Querschnittsabmessung (q) des Glieddrahtes geringer ist als die lichte Weite (w) der Verengung.

3. Verstellanordnung nach Anspruch 2, **dadurch gekennzeichnet, daß** die Eintiefung (1) dem Draht- bzw. Querschnittsprofil des Verstellgliedes (V) angepaßt ist.

4. Verbindungsglied für Ketten, die mit Endgliedern (E1..E4) in das Verbindungsglied eingehängt sind,
**dadurch gekennzeichnet, daß**
das Verbindungsglied als doppelkeulenförmiges Verstellglied (V) ausgeführt ist und durch eine Verengung (1) voneinander abgesetzte Aufnahmeöffnungen (A1,A2) aufweist.

5. Verbindungsglied für Ketten nach Anspruch 4, **dadurch gekennzeichnet, daß** die lichte Weite (w) der Verengung kleiner ist als der Drahtdurchmesser (d) der Endglieder (E1..E4), jedoch jedes der Endglieder in zumindest einem Längsschenkel eine Eintiefung (2), Abflachung od. dgl. aufweist, in deren Bereich zumindest eine Querschnittsabmessung (q) des Glieddrahtes geringer ist als die lichte Weite (w) der Verengung.

6. Verbindungsglied nach Anspruch 4, **dadurch gekennzeichnet, daß** die Eintiefung (2) dem Draht- bzw. Querschnittsprofil des Verstellgliedes (V) angepaßt ist.

7. Reifenkette für Kraftfahrzeuge, mit einem Kettennetz für die Lauffläche eines Rades und mit Haltemitteln zum Festlegen des Kettennetzes an dem Rad, wobei das Kettennetz Knotenpunkte aufweist, in welchen die Endglieder (E1..E4) von zumindest zwei Kettenstücken (K 1..K4) miteinander verbunden sind,
**dadurch gekennzeichnet, daß**
bei ein oder mehreren Knotenpunkten zur Verbindung der Kettenstücke (K1..K4) ein doppelkeulenförmiges Verstellglied (V) vorgesehen ist, welches zwei, durch eine Verengung (1) voneinander abgesetzte Aufnahmeöffnungen (A1,A2) für eingehängte Endglieder (E1..E4) aufweist.

8. Reifenkette nach Anspruch 7, **dadurch gekennzeichnet, daß** die Ebene des Verstellgliedes (V) im wesentlichen tangential zur Lauffläche des Rades verläuft.

9. Reifenkette nach Anspruch 7 oder 8, **dadurch gekennzeichnet, daß** die lichte Weite (w) der Verengung (1) kleiner ist, als der Drahtdurchmesser (d) der Endglieder (E1..E4) und jedes der Endglieder (E1..E4) in zumindest einem Längsschenkel eine Eintiefung (2) Abflachung od. dgl. aufweist, in deren Bereich zumindest eine Querschnittsabmessung (q) des Glieddrahtes geringer ist als die lichte Weite (w) der Verengung.

10. Reifenkette nach Anspruch 9, **dadurch gekennzeichnet, daß** die Eintiefung (2) dem Draht- bzw. Querschnittsprofil des Verstellgliedes (V) angepaßt ist.

11. Sicherungsstück (S) für eine Verstellanordnung nach einem der Ansprüche 1 bis 3, ein Verbindungsglied nach einem der Ansprüche 4 bis 6 oder eine Reifenkette nach einem der Ansprüche 8 bis 10,
**dadurch gekennzeichnet, daß**
das aus Kunststoff bestehende plattenförmige Sicherungsstück (S) eine dem verengten Mittetteil des doppelkeulenförmigen Verstellgliedes (V) angepaßte Ausnehmung (AU) aufweist, in welcher der Mittelteil des Verstellgliedes aufnehmbar ist und dabei nach oben hin durch die Ausnehmung zumindest teilweise abdeckende elastisch wegbiegbare Stege (St1, St2) abdeckbar ist.

12. Sicherungsstück (S) nach Anspruch 11, **dadurch gekennzeichnet, daß** es außerhalb der Ausnehmung (AU), vorzugsweise zu beiden Seiten derselben eingesetzte Spikes (SP) aufweist.

13. Sicherungsstück (S) nach Anspruch 11 oder 12, **dadurch gekennzeichnet, daß** am Boden der Ausnehmung (AU) ein nach oben ragender Mittelsteg (MS) vorgesehen ist.

## Claims

1. Adjusting system for the joining point of chain lengths (K1 .. K4) at which these are connected to each other via end links (E1 .. E4),
**characterised in that**
a double lobe-shaped adjusting member (V) is provided which has two receiving orifices (A1, A2), which are spaced apart from each other by a narrowed region (1), for inserted end links (E1 ..E4) of the chain lengths (K1 ..K4).

2. Adjusting system as claimed in claim 1, **characterised in that** the inside diameter (w) of the narrowed region (1) is smaller than the wire diameter (d) of the end links (E1 ..E4) and, on at least one long side, each of the end links (E1 ..E4) has an indentation (2), flattened area or the like, in the region of which at least one cross-sectional dimension (q) of the link wire is smaller than the inside diameter (w) of the narrowed region.

3. Adjusting system as claimed in claim 2, **characterised in that** the indentation (1) is adapted to the wire or cross-sectional profile of the adjusting member (V).

4. Connecting member for chains which are inserted into the connecting member by means of end links (E1 ..E4),
**characterised in that**
the connecting member is formed as a double lobe-shaped adjusting member (V) and has receiving orifices (A1, A2) which are spaced apart from each other by a narrowed region (1).

5. Connecting member for chains as claimed in claim 4, **characterised in that** the inside diameter (w) of the narrowed region is smaller than the wire diameter (d) of the end links (E1 ..E4) but, on at least one long side, each of the end links has an indentation (2), flattened area or the like, in the region of which at least one cross-sectional dimension (q) of the link wire is smaller than the inside diameter (w) of the narrowed region.

6. Connecting member as claimed in claim 4, **characterised in that** the indentation (2) is adapted to the wire or cross-sectional profile of the adjusting member (V).

7. Tyre chain for motor vehicles, having a chain mesh for the tread of a wheel and having holding means for fixing the chain mesh on the wheel, wherein the chain mesh has joining points at which the end links (E1 ..E4) of at least two chain pieces (K1 ..K4) are connected to each other,
**characterised in that**
in the case of one or a plurality of joining points for connection of the chain pieces (K1 ..K4), a double lobe-shaped adjusting member (V) is provided which has two receiving orifices (A1, A2), which are spaced apart from each other by a narrowed region (1), for inserted end links (E1 ..E4).

8. Tyre chain as claimed in claim 7, **characterised in that** the plane of the adjusting member (V) extends substantially tangentially to the tread of the wheel.

9. Tyre chain as claimed in claim 7 or 8, **characterised in that** the inside diameter (w) of the narrowed region (1) is smaller than the wire diameter (d) of the end links (E1 ..E4) and, on at least one long side, each of the end links (E1 ..E4) has an indentation (2), flattened area or the like, in the region of which at least one cross-sectional dimension (q) of the link wire is smaller, than the inside diameter (w) of the narrowed region.

10. Tyre chain as claimed in claim 9, **characterised in that** the indentation (2) is adapted to the wire or cross-sectional profile of the adjusting member (V).

11. Securing piece (S) for an adjusting system as claimed in any one of claims 1 to 3, connecting member as claimed in any one of claims 4 to 6 or tyre chain as claimed in any one of claims 8 to 10,
**characterised in that**
the plate-like securing piece (S) consisting of synthetic material has a recess (AU) adapted to the narrowed middle part of the double lobe-shaped adjusting member (V), in which recess the middle part of the adjusting member can be received and in so doing can be covered in the upwards direction by elastically deflectable webs (St1, St2) which at least partially cover the recess.

12. Securing piece (S) as claimed in claim 11, **characterised in that**, outside the recess (AU), the securing piece preferably has studs (SP) inserted at both sides of the recess.

13. Securing piece (S) as claimed in claim 11 or 12, **characterised in that** an upwardly protruding middle web (MS) is provided on the bottom of the recess (AU).

## Revendications

1. Dispositif de réglage pour le point de raccordement de brins (K1...K4) de chaîne, au niveau duquel ces brins de chaîne sont reliés entre eux par l'intermédiaire de maillons d'extrémité (E1...E4),
**caractérisé en ce que**
il est prévu un organe de réglage (V) formé de deux lobes, qui comprend deux ouvertures de réception (A1,A2) des maillons d'extrémité accrochés (E1...E4) des brins de chaîne (K1 ... K4) qui sont séparées l'une de l'autre par un rétrécissement (1).

2. Dispositif de réglage selon la revendication 1, **caractérisé en ce que** la largeur intérieure(w) du rétrécissement (1) est inférieure au diamètre (d) du brin des maillons d'extrémité (E1...E4), et **en ce que** chacun des maillons d'extrémité (E1...E4) comporte, dans au moins une branche longitudinale, un renfoncement (2), méplat ou analogue, dans la zone duquel au moins une dimension (q), en section transversale du brin du maillon, est inférieure à la largeur intérieure(w) du rétrécissement.

3. Dispositif de réglage selon la revendication 2, **caractérisé en ce que** le renfoncement (2) est adapté au profil du brin ou de la section transversale de l'organe de réglage (V).

4. Organe de liaison pour chaînes, qui sont accrochées par des maillons d'extrémité (E1...E4) à cet organe de liaison,
**caractérisé en ce que**
l'organe de liaison présente la forme d'un organe de réglage formé de deux lobes (V) et comporte des ouvertures de réception (A1,A2) séparées l'une de l'autre par un rétrécissement (1).

5. Organe de liaison pour chaînes selon la revendication 4, **caractérisé en ce que** la largeur intérieure (w) du rétrécissement est inférieure au diamètre (d) du brin des maillons d'extrémité (E1...E4), et **en ce que** chacun des maillons d'extrémité (E1...E4) comporte, dans au moins une branche longitudinale, un renfoncement (2), méplat ou analogue, dans la zone duquel au moins une dimension (q), en section transversale du brin du maillon, est inférieure à la largeur intérieure(w) du rétrécissement.

6. Organe de liaison selon la revendication 4, **caractérisé en ce que** le renfoncement (2) est adapté au profil du brin ou de la section transversale de l'organe de réglage (V).

7. Chaîne pour pneumatique de véhicules automobiles, comportant un réseau de chaîne pour la surface de roulement d'une roue et des moyens de retenue pour fixer le réseau de chaîne à la roue, le réseau de chaîne comportant des points de raccordement, au niveau desquels les maillons d'extrémité (E1...E4) d'au moins deux éléments de chaîne (K1...K4) sont reliés entre eux,
**caractérisée en ce que**
dans le cas d'un ou de plusieurs points de raccordement pour la liaison des éléments de chaîne (K1...K4), il est prévu un organe de réglage (V) formé de deux lobes, qui comporte deux ouvertures de réception (A1,A2) des maillons d'extrémité (E1...E4) accrochés, qui sont séparées l'une de l'autre par un rétrécissement (1).

8. Chaîne pour pneumatique selon la revendication 7, **caractérisée en ce que** le plan de l'organe de réglage (V) s'étend pratiquement tangentiellement à la surface de roulement de la roue.

9. Chaîne pour pneumatique selon la revendication 7 ou 8, **caractérisée en ce que** la largeur intérieure(w) du rétrécissement (1) est inférieure au diamètre (d) du brin des maillons d'extrémité (E1...E4), et **en ce que** chacun des maillons d'extrémité (E1...E4) comporte, dans au moins une branche longitudinale, un renfoncement (2), méplat ou analogue, dans la zone duquel au moins une dimension (q), en section transversale du brin du maillon, est inférieure à la largeur intérieure (w) du rétrécissement.

10. Chaîne pour pneumatique selon la revendication 9, **caractérisé en ce que** le renfoncement (2) est adapté au profil du brin ou de la section transversale de l'organe de réglage (V).

11. Élément de sécurité (S) pour un dispositif de réglage selon l'une des revendications 1 à 3, un organe de liaison selon l'une des revendications 4 à 6 ou une chaîne pour pneumatique selon l'une des revendications 8 à 10,
**caractérisé en ce que**
l'élément de sécurité (S) en forme de plaque et formé d'une matière plastique comporte un évidement (AU), qui est adapté à la partie médiane rétrécie de l'organe de réglage à deux lobes (V), dans lequel peut être reçue la partie médiane de l'organe de réglage qui peut être recouverte, vers le haut, par des barrettes flexibles élastiquement (St1, St2), qui recouvrent au moins partiellement l'évidement.

12. Élément de sécurité (S) selon la revendication 11, **caractérisé en ce qu'**il comporte des pointes disposées (SP) à l'extérieur de l'évidement (AU), de préférence des deux côtés de ce dernier.

13. Élément de sécurité (S) selon la revendication 11 ou 12, **caractérisé en ce qu'**une barrette médiane (MS), qui fait saillie vers le haut, est prévue sur le fond de l'évidement (AU).
